# EUROPÄISCHE PATENTANMELDUNG

(11) **EP 1 530 000 A1**
(43) Veröffentlichungstag der Anmeldung: **11.05.2005**
(21) Anmeldenummer: 03025196.1
(22) Anmeldetag: 04.11.2003
(51) Int. Cl.: F16L 55/134

(54) **Aufblasbares Rohrdichtkissen**

(71) Anmelder: Haro, Jürgen, 37627 Stadtoldendorf (DE)
(72) Erfinder: Haro, Jürgen, 37627 Stadtoldendorf (DE)
(74) Vertreter: Lins, Edgar, Dipl.-Phys. Dr.jur.

(57) **Zusammenfassung**

Ein aufblasbares Rohrdichtkissen für Rohrleitungen (8) mit einem zylindrischen Kissenkern in Form eines Rohres (1) und einem das Rohr (1) umgebenden aufblasbaren, im Wesentlichen zylindrischen Mantelkissen (4) mit einer flexiblen, aber unelastischen Wandung, die im aufgeblasenen Zustand zur Anlage an einer Rohrinnenwand der Rohrleitung (8) mit einem vorgegebenen maximalen Rohrdurchmesser bestimmten zylindrischen äußeren Mantelabschnitt (5) aufweist, der über axiale Endabschnitte (7) mit einem zur Anlage am Rohr (1) bestimmten zylindrischen inneren Mantelabschnitt (6) verbunden ist, erlaubt bei einfacher Montage eine zuverlässige Abdichtung dadurch, dass der innere Mantelabschnitt (6) mit wenigstens einem axialen hülsenförmigen Verlängerungsstück (14) versehen ist, das axial über einen Verbindungsabschnitt (18) mit dem betreffenden axialen Endabschnitt (7) herausragt und dass das Verlängerungsstück (14) an dem Rohr (1) festgelegt ist.

## Beschreibung

Die Erfindung betrifft ein aufblasbares Rohrdichtkissen für Rohrleitungen mit einem zylindrischen Kissenkern in Form eines Rohres und einem das Rohr umgebenden aufblasbaren, im Wesentlichen zylindrischen Mantelkissen mit einer flexiblen, aber unelastischen Wandung, die im aufgeblasenen Zustand zur Anlage an einer Rohrinnenwand der Rohrleitung mit einem vorgegebenen maximalen Rohrdurchmesser bestimmten zylindrischen äußeren Mantelabschnitt aufweist, der über axiale Endabschnitte mit einem zur Anlage am Rohr bestimmten zylindrischen inneren Mantelabschnitt verbunden ist.

Zur Abdichtung von Rohrleitungen sind aufblasbare Rohrdichtkissen bekannt. Die EP 0 467 077 B1 offenbart ein Rohrdichtkissen mit einer im Wesentlichen zylindrischen, flexiblen aber unelastischen Wandung mit einem Wandabschnitt, der im aufgeblasenen Zustand des Rohrdichtkissens zur Anlage an der Rohrinnenwand bestimmt ist. Das Kissen weist konische Endstücke sowie ein kreiszylindrisches Mittelstück auf. Die Abdichtung bei unterschiedlichen Rohrdurchmessern erfolgt linienförmig an den konischen Endstücken im Bereich desjenigen Durchmessers, der dem Innendurchmesser der Rohrleitung entspricht. Das im Allgemeinen Falten ausbildende zylindrische Mittelstück kann zur Abdichtung ebenfalls beitragen, wenn es mit einem geschlossenen, umlaufenden Dichtungsstreifen aus einem elastischen Material versehen ist, wobei der Dichtungsstreifen im aufgeblasenen Zustand eine Abdichtung zwischen dem zylindrischen Mittelstück und der Rohrinnenwand auch im Bereich der Falten bewirkt.

Aus EP 0 625 670 B1 ist ferner ein Rohrdichtkissen bekannt, das stationär in einer Rohrleitung montiert wird, um in einfacher Weise die Funktion von herkömmlichen Absperrschiebern zu erfüllen. Das aufblasbare Rohrdichtkissen ist dabei ringförmig ausgebildet und an der Halterung radial außen flachgelegt montiert. Beim Aufblasen wölbt sich das Rohrdichtkissen nach radial innen soweit auf, dass die radiale Innenwand allseitig gegen sich selbst gedrückt wird, um so die Rohrleitung sicher zu verschließen. Ein derartiges Rohrdichtkissen lässt sich ausschließlich stationär montiert verwenden.

Die an beliebiger Stelle einsetzbaren bekannten Rohrdichtkissen lassen sich zuverlässig nur über einen nicht allzu großen Bereich der Durchmesservariation einsetzen und sind für große Rohrdurchmesser nur bedingt geeignet, da für durch große Rohrdurchmesser bedingte große Berstradien besonders haltbares Material für einen vorgegebenen Innendruck verwendet werden muss.

Ein Rohrdichtkissen zur Abdichtung von Rohrleitungen ist ferner aus der DE 100 19 350 A1 bekannt. Dabei ist der Kissenkern durch ein ebenfalls aufblasbares zylindrisches Kissen mit einer flexiblen, aber unelastischen Wandung gebildet. Die Anordnung aus Kissenkern und Mantelkissen wird gemeinsam über ein einziges Ventil am Kissenkern aufgeblasen, wobei sich zunächst der Kissenkern im Wesentlichen vollständig zu seiner aufgeblasenen Form aufrichtet und anschließend das Mantelkissen aufgeblasen wird. Gegenüber den vorbekannten einteiligen Rohrdichtkissen werden radial verschiedene Kissenzonen gebildet, durch die der wirksame Berstradius verkleinert wird, sodass mit gleichem Material höhere Drücke oder vorgegebene Drücke mit einem weniger stabilen Material realisierbar sind. Um ein Abrollen des Mantelkissens vom Kissenkern zu vermeiden, sind die Gurte vorgesehen, die das Mantelkissen relativ zum Kissenkern axial festlegen.

Durch DE 37 24 372 A1 ist ein zylindrisches Rohrdichtkissen der eingangs erwähnten Art bekannt, bei dem ein eine Durchführung bildendes, beidseitig offenes Rohr exzentrisch in dem Rohrdichtkissen angeordnet ist. Die dem Rohr benachbarte innere Mantelwand soll am Außendurchmesser des Rohres anliegend und beim Aufblasen des Rohrdichtkissens die Abdichtung zum Rohr bewirken. Ein derartiges Rohrdichtkissen lässt sich in der Praxis nicht stabil aufbauen, da eine Abrollbewegung des aufgeblasenen Kissens von dem Rohr nicht zu vermeiden ist.

Der vorliegenden Erfindung liegt die Aufgabe zugrunde, ein Rohrdichtkissen der eingangs erwähnten Art zur Verfügung zu stellen, das in der Praxis als Rohrabdichtung zuverlässig einsetzbar und dennoch einfach zu montieren ist.

Diese Aufgabe wird erfindungsgemäß mit einem aufblasbaren Rohrdichtkissen der eingangs erwähnten Art dadurch gelöst, dass der innere Mantelabschnitt mit wenigstens einem axialen hülsenförmigen Verlängerungsstück versehen ist, das axial über einen Verbindungsabschnitt mit dem betreffenden axialen Endabschnitt herausragt, und dass das Verlängerungsstück an dem Rohr festgelegt ist.

Das erfindungsgemäße aufblasbare Rohrdichtkissen ermöglicht eine Abdichtung von Rohren unterschiedlichen Durchmessers, da das aufblasbare Mantelkissen die Anpassung an verschiedene Rohrdurchmesser erlaubt. Das den Mantelkern bildende Rohr kann einen Bypass bilden, wenn es auf beiden Stirnseiten offen ist. An das Rohr können weitere Rohrstücke, vorzugsweise durch Aufstecken, angeschlossen werden, um so eine Bypass-Rohrleitung über die Länge der Baustelle hinweg zu realisieren. Auf diese Weise kann anstehendes Wasser oder eine andere Flüssigkeit abgeleitet und der Baustellenbereich trotzdem trocken gehalten werden. Eine zuverlässige Verbindung zwischen Mantelkissen und Rohr wird erfindungsgemäß dadurch gebildet, dass das sich an den inneren Mantelabschnitt hülsenförmig anschließende Verlängerungsstück an dem Rohr festgelegt ist, vorzugsweise mit Hilfe einer Spannvorrichtung. Besonders bevorzugt ist es, wenn der innere Mantelabschnitt beidseitig mit axialen hülsenförmigen Verlängerungsstücken versehen ist, die beide an dem Rohr festgelegt sind. Trotz einfacher Montage lässt sich eine zuverlässige Verbindung zwischen dem Mantelkissen und dem Rohr auf diese Weise herstellen, wobei ein Abrollen des Mantelkissens von dem Rohr sicher verhindert wird.

In einer bevorzugten Ausführungsform der Erfindung ist das Verlängerungsstück auf seiner zum Rohr hin zeigenden Seite mit einem umlaufenden Dichtstreifen versehen. Dieser ist vorzugsweise aus einem geschlossenzelligen Kunststoffschaum gebildet und kann bevorzugt auf der axialen Höhe der Spannvorrichtung angeordnet sein, sodass die Spannvorrichtung das Verlängerungsstück auf den Dichtstreifen und somit gegen die Wandung des Rohres drückt.

Alternativ dazu oder ergänzend kann der innere Mantelabschnitt auf seiner dem Rohr zugewandten Seite mit wenigstens einem umlaufenden Dichtstreifen versehen sein. In diesem Fall können die Dichtstreifen an den Verlängerungsstücken entfallen oder aber zusätzlich vorgesehen sein.

In einer besonders bevorzugten Ausführungsform der Erfindung sind der innere Mantelabschnitt und dass wenigstens eine Verlängerungsstück gemeinsam als einstückiges Hülsenteil ausgebildet, an dem die axialen Endstücke an dem Verbindungsabschnitt befestigt sind, vorzugsweise anvulkanisiert sind.

Insbesondere für das Einbringen der Rohrleitung in das Mantelkissen ist es vorteilhaft, wenn der innere Mantelabschnitt des zylindrischen Mantelkissens einen Durchmesser aufweist, der größer ist als der Außendurchmesser des Rohres und wenn auf dem inneren Mantelabschnitt oder auf wenigstens einem axialen Endabschnitt zum Rohr zeigend wenigstens ein umlaufender Dichtstreifen aus einem geschlossenzelligen, weichen Dichtmaterial angeordnet ist. Demgemäß wird auch für das Anliegen des inneren Mantelabschnitts an dem den Kissenkern bildenden Rohr eine Faltenbildung vorgesehen und die Abdichtung mit dem auch bei Faltenbildung abdichtenden umlaufenden Dichtstreifen vorgenommen, wobei der Dichtstreifen an der inneren Mantelwand und/oder dem Verlängerungsstück angebracht sein kann. Für die nicht unkritische Abdichtung zwischen Mantelkissen und Rohrinnenwand wird in einer besonders bevorzugten Ausführungsform der Erfindung das zylindrische Mantelkissen aus dem zylindrischen äußeren Mantelabschnitt, einem dazu parallel angeordneten zylindrischen inneren Mantelabschnitt sowie zwei die Mantelabschnitte verbindenden gewölbten axialen Endabschnitten gebildet, wobei der Durchmesser des äußeren Mantelabschnitts gleich oder größer ist als der vorgegebene maximale Rohrdurchmesser der Rohrleitung und wobei auf der Außenseite des äußeren Mantelabschnitts wenigstens ein Dichtstreifen aus einem geschlossenzelligen, weichen Dichtmaterial umlaufend angeordnet ist. Diese Ausbildung des Mantelkissens beruht auf der Erkenntnis, dass bei der Verwendung eines flexiblen, aber nicht elastischen Materials der zylindrische äußere Mantelabschnitt des Mantelkissens bei kleineren Rohrleitungen als maximal möglich notwendigerweise mit einer mehr oder weniger starken Faltenbildung an der Rohrinnenwand anliegen muss. Eine unmittelbare alleinige Abdichtung durch das Material des Mantelkissens ist problematisch. Es wird daher vorgesehen, wenigstens einen Dichtstreifen aus einem geschlossenzelligen, weichen Dichtmaterial umlaufend auf dem äußeren Mantelabschnitt anzuordnen, mit dem eine Abdichtung auch bei Faltenbildung möglich ist.

Zur zusätzlichen Stabilisierung des Mantelkissens auf dem Rohr kann das Mantelkissen mit mehreren, in seinem Innenraum verlaufenden Gurten versehen sein, die von dem inneren Mantelabschnitt ausgehen.

Vorzugsweise bilden die Gurte jeweils ein Gurtpaar, dessen Gurte sich an gleichen Winkelpositionen befinden und sich parallel zur Längsachse des Rohres erstrecken. Bezüglich einer axialen Mittenachse sind die Gurte eines Gurtpaares vorzugsweise spiegelsymmetrisch angeordnet.

Da das erfindungsgemäße Mantelkissen im nicht aufgeblasenen Zustand eine sperrige und nicht einfach zu handhabende Hülle bildet, die leicht gegenüber der Rohrlängsachse mit Verwindungen ausgerichtet sein kann, kann es vorkommen, dass die Stabilisierungsgurte im Innenraum des Mantelkissens unterschiedliche Abstände zwischen ihren Befestigungspunkten zu überbrücken haben. Dadurch kann es passieren, dass die gesamte Stabilisierungskraft zunächst auf einem einzigen Gurt liegt, der dadurch unter Umständen zu stark belastet wird. Erfindungsgemäß ist daher in einer bevorzugten Ausführungsform vorgesehen, dass die axialen Endabschnitte an ihrer Außenseite Markierungen tragen, deren Ausrichtung der Winkellage der Gurte entsprechen. Dadurch kann beim Montieren sichergestellt werden, dass die Gurte einerseits in der richtigen Winkellage angeordnet werden und andererseits im Bereich der Gurte keine Falten auftreten, die den von den Gurten zu überbrückenden Abstand beeinflussen würden.

Vorzugsweise sind zur Stabilisierung des erfindungsgemäßen Mantelkissens zwei diametral einander gegenüber liegende Gurtpaare vorgesehen.

Der erfindungsgemäß im Kern des Mantelkissens durch das Rohr ausgebildete Bypass kann gegebenenfalls verschließbar ausgebildet sein, vorzugsweise mittels eines aufblasbaren Innenkissens des Rohres. Da das Rohr einen festen Durchmesser aufweist, ist eine Abdichtung mit einem entsprechend dimensionierten Innenkissen unproblematisch.

An das den Bypass bildende vorzugsweise starre Rohr können weitere Rohrstükke, vorzugsweise durch Aufstecken, angeschlossen werden, um so eine Bypass-Rohrleitung über die Länge der Baustelle hinweg zu realisieren. Auf diese Weise kann anstehendes Wasser oder eine andere Flüssigkeit abgeleitet und der Baustellenbereich trotzdem trocken gehalten werden.

Die Erfindung soll im Folgenden anhand von in der Zeichnung dargestellten Ausführungsbeispielen näher erläutert werden. Es zeigen:
- Figur 1 -: einen Vertikalschnitt eines ersten Ausführungsbeispiels eines erfindungsgemäßen Rohrdichtkissens, bestehend aus einem durch ein Rohr gebildeten Kissenkern und einem ringförmig darum angeordneten Mantelkissen, das in zwei Extremstellungen dargestellt ist
- Figur 2 -: eine Ansicht der Stirnseite der Anordnung gemäß Figur 1.

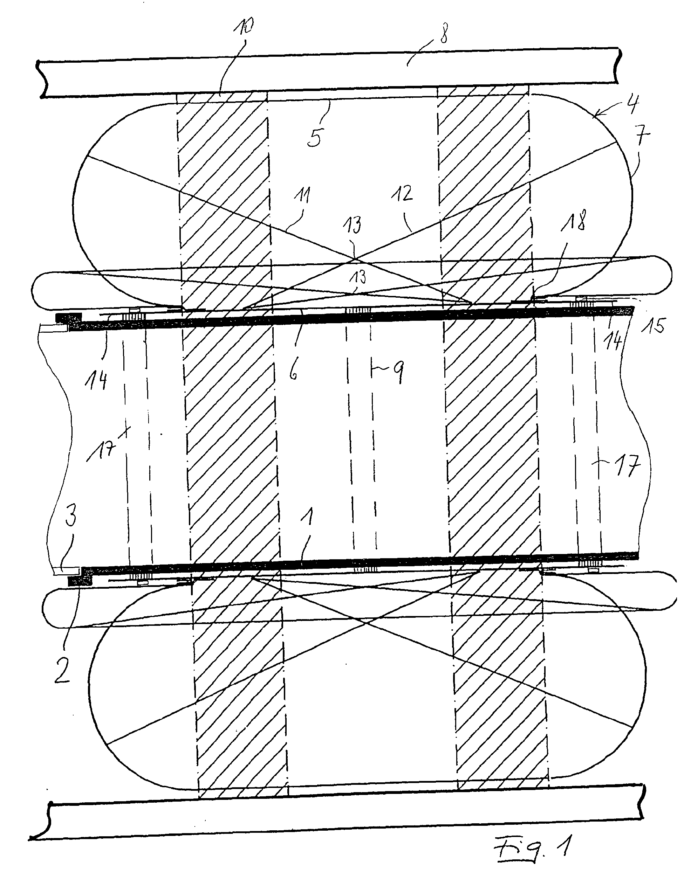

Das in Figur 1 im aufgeblasenen Zustand für einen maximalen Rohrdurchmesser und einen minimalen Rohrdurchmesser dargestellte Rohrdichtkissen besteht aus einem Kissenkern in Form eines Rohres 1, das an einem Ende eine radial erweiterte Muffe 2 aufweist, in die ein Ende eines Rohrstücks 3 zur Verlängerung der Bypass-Leitung einsteckbar ist.

Das Rohr 1 ist von einem ringförmigen Mantelkissen 4 umgeben, das im Längsschnitt zylindrisch ausgebildet ist und einen zylindrischen äußeren Mantelabschnitt 5, einen inneren zylindrischen Mantelabschnitt 6 und die beiden Mantelabschnitte 5, 6 verbindende gewölbte Endabschnitte 7 aufweist.

Figur 1 zeigt das Mantelkissen 4 in einer Form zur Abdichtung des maximalen vorgegebenen Rohrdurchmessers einer Rohrleitung 8 und ein Mantelkissen 4 in einer sehr flachen Form zur Abdichtung einer (nicht dargestellten) Rohrleitung mit einem minimalen Rohrinnendurchmesser. Ein Rohrdichtkissen der hier beschriebenen Art ist für einen bestimmten Rohrdurchmesserbereich vorgesehen und zugelassen, woraus sich der vorbestimmte minimale und maximale Rohrdurchmesser der Rohrleitung 8 ergibt.

Die Darstellung der beiden extremen Formen des Mantelkissens 4 in Figur 1 lässt erkennen, dass sich im Wesentlichen die gewölbten Endabschnitte 7 zur Anpassung an die unterschiedlichen Rohrdurchmesser verformen.

Es ist erkennbar, dass eine Abdichtung zwischen der inneren Mantelwand 6 des Mantelkissens 4 und dem Rohr 1 mit Hilfe eines zwischen Rohr 1 und innerem Mantelabschnitt 6 umlaufenden Dichtstreifen 9 erfolgt.

Figur 1 lässt ferner erkennen, dass um den äußeren Mantelabschnitt 5 des Mantelkissens 4 zwei breite Dichtstreifen 10 ringförmig umlaufen. Die Dichtstreifen 10 bestehen aus elastischem, weichem Material aus einem geschlossenzelligen Schaumstoff oder Moosgummi. Die Elastizität der Dichtstreifen 10 ist so groß, dass der Dichtstreifen 10 eine Dichtung zwischen dem äußeren Mantelabschnitt 5 und der Rohrinnenwand der Rohrleitung 8 auch bei Bildung von Falten in dem äußeren Mantelabschnitt 5 sicher bewirkt.

Im Innenraum des Mantelkissens 4 verlaufen Gurte 11, 12, die auf gleicher Winkelposition bezüglich der Längsachse des Rohres 1 ein Gurtpaar 11, 12 bilden. In jedem Gurtpaar 11, 12 verläuft ein Gurt von einer Position auf einer Seite der Mitte der axialen Länge des Rohrdichtkissens zu einem stirnseitigen Endbereich des Mantelkissens 4 auf der anderen Seite der axialen Mitte der Länge des Rohrdichtkissens. Symmetrisch zu der axialen Mittenebene des Mantelkissens verläuft der zugehörige Gurt des Gurtpaares 11, 12 von der anderen Seite der axialen Mitte der Länge des Rohrdichtkissens zum anderen Endbereich des Mantelkissens 4. Die Gurte 11, 12 kreuzen sich somit in Höhe der axialen Mittenebene des Mantelkissens 4 an einem Punkt 13.

Die Gurte 11, 12, die eine Verschiebung des äußeren Mantelabschnitts 5 gegenüber dem inneren Mantelabschnitt 6 verhindern sollen, enden im stirnseitigen Endabschnitt 7 in einem dem äußeren Mantelabschnitt 5 benachbarten Bereich.

Der Mantelabschnitt 6 ist beidseitig mit axialen Verlängerungsstücken 14 versehen, die mit Hilfe eines Spannrings 15 gegen die Außenseite des Rohres 1 gedrückt werden, wodurch das Mantelkissen 4 an dem Rohr 1 fixiert wird. In dem in Figur 1 dargestellten Ausführungsbeispiel befindet sich auf der Innenseite des Verlängerungsstücks 19 zum Rohr 1 hin zeigend ein umlaufender Dichtstreifen 17, sodass das Verlängerungsstück 14 durch des Spannring 15 unter Eindrücken des Dichtstreifens 17 gegen die Außenseite des Rohres 1 gedrückt wird.

Die Abdichtung des Mantelkissens 4 am Rohr 1 mittels der Dichtstreifen 17 kann entfallen, wenn die Dichtstreifen 9 zwischen dem inneren Mantelabschnitt 6 und der Außenseite des Rohres 1 vorgesehen sind. Ferner ist es möglich, Dichtstreifen 17 an den Verlängerungsstücken 14 vorzusehen, jedoch nicht aus gleicher Höhe mit dem Spannring 15.

In dem dargestellten Ausführungsbeispiel sind die Verlängerungstücke 14 einstückig mit dem inneren Mantelabschnitt 6 als ein hülsenförmiges Teil ausgebildet. Die gewölbten Endabschnitte sind an einem Verbindungsabschnitt 18 mit dem inneren Mantelabschnitt 6, vorzugsweise durch Vulkanisierung, verbunden. Die Verlängerungsstücke 14, und somit auch der innere Mantelabschnitt 6, weist vorzugsweise einen Durchmesser auf, der 4 bis 10 cm größer ist als der Außendurchmesser des Rohres 1. Somit liegen der innere Mantelabschnitt 6 und die Verlängerungsstücke 14 unter Faltenbildung an dem Außendurchmesser des Rohres 1 an. Dennoch gelingt eine vollständige Abdichtung, da die Dichtstreifen 9 und/oder 17 eine Abdichtung auch bei einer Faltenbildung ermöglichen, wenn sie aus einem geeigneten Material gebildet sind, wie beispielsweise aus einem geschlossenzelligen Kunststoffschaum, insbesondere Moosgummi.

Die Länge des aus innerem Mantelabschnitt 6 und Verlängerungsstücken 14 gebildeten hülsenförmigen Teils beträgt vorzugsweise 120 bis 150 % des maximalen Durchmessers der Rohrleitung 8. Eine entsprechende bevorzugte Länge kann auch das Rohr 1 aufweisen. Mit dieser Dimensionierung ist eine zuverlässige Abdichtung und stabile Positionierung des aufblasbaren Rohrdichtkissens auch unter ungünstigen Bedingungen möglich.

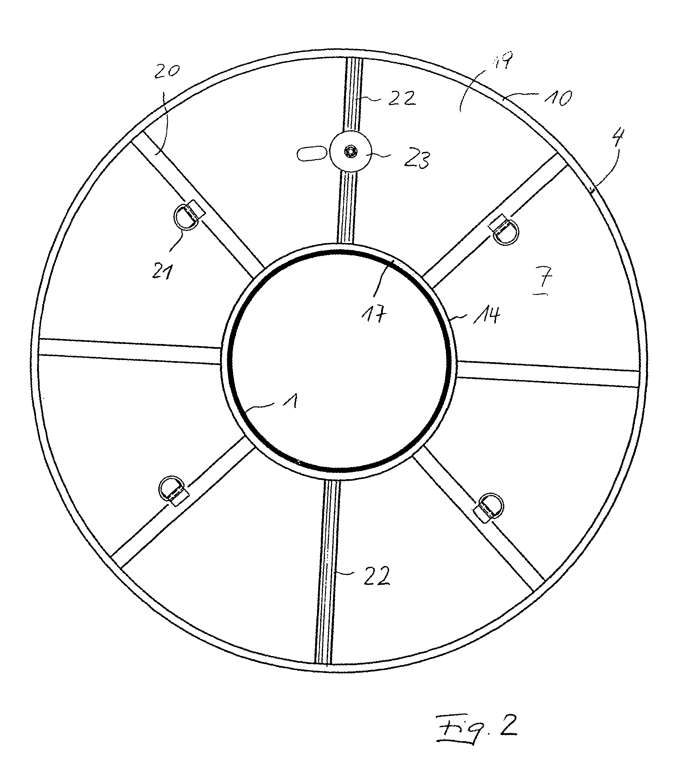

Die Draufsicht auf einen gewölbten Endbereich 7 des Mantelkissens 4 in Figur 2 zeigt, dass der gewölbte Endbereich aus mehreren, hier acht, trapezförmigen Zuschnitten 19 besteht, die miteinander verbunden sind. Die Verbindungslinien sind durch aufvulkanisierte Abdeckstreifen 20 abgedeckt, an denen D-förmige Bügel 21 befestigt sind, mit denen das Dichtkissen zum Positionieren gezogen oder das Dichtkissen verpackt werden kann.

Auf dem stirnseitigen Endbereich 7 befinden sich zwei miteinander fluchtende, diametral auf einem Durchmesser liegende streifenförmige Markierungen 22, die die Lage der Gurtpaare 12, 13 im Innern des Mantelkissens 4 kennzeichnen. Bei der Montage des Dichtkissens ist darauf zu achten, dass die streifenförmigen Markierungen 22 miteinander fluchten und nicht im Bereich von Falten des äußeren Mantelabschnitts 5 oder des inneren Mantelabschnitts 6 liegen, um eine ungleichmäßige Längenbeanspruchung der Gurte 12, 13 zu vermeiden.

Figur 2 lässt ferner ein Einfüllventil 23 erkennen, mit dem das Mantelkissen 4 auf seinen Arbeitsdruck von ca. 1 bar aufgeblasen wird.

Figur 2 verdeutlicht ferner, dass der innere Mantelabschnitt 6 einen größeren Durchmesser als das Rohr 1 aufweist, sodass der Mantelabschnitt 6 durch den Betriebsdruck unter Faltenbildung gegen die Außenseite des Rohres 1 gedrückt wird. Die Abdichtung trotz der Faltenbildung besorgen die Dichtstreifen 17.

Die erfindungsgemäße Verbindung zwischen Rohr 1 und Mantelkissen 4 ermöglicht, dass das Rohr 1 mit dem Mantelkissen 4 bereits montiert und gemeinsam transportiert werden können, wobei die Abdichtung zwischen Mantelkissen 4 und Rohr bereits hergestellt ist.

Die in Figur 2 dargestellte Lage des Einfüllventils 23 kann ebenfalls variiert werden. Insbesondere ist es möglich, dass Einfüllventil 23 an einem zum Rohr 1 benachbarten Abschnitt des gewölbten Endabschnitts 7 anzuordnen oder auch durch den inneren Mantelabschnitt 6 hinduchzuführen und zwischen dem inneren Mantelabschnitt 6 und dem Rohr 1 in dem Bereich des axialen Endabschnitts 7 zu leiten.

Es ist ferner möglich, das Rohr 1 mit Markierungen oder mit Rillungen oder Stegen zu versehen, die die Positionierung der Spannvorrichtung 15 zur Befestigung der Verlängerungsstücke 14 erleichtern bzw. verbessern.

## Patentansprüche

1. Aufblasbares Rohrdichtkissen für Rohrleitungen (8) mit einem zylindrischen Kissenkern in Form eines Rohres (1) und einem das Rohr (1) umgebenden aufblasbaren, im Wesentlichen zylindrischen Mantelkissen (4) mit einer flexiblen, aber unelastischen Wandung, die im aufgeblasenen Zustand zur Anlage an einer Rohrinnenwand der Rohrleitung (8) mit einem vorgegebenen maximalen Rohrdurchmesser bestimmten zylindrischen äußeren Mantelabschnitt (5) aufweist, der über axiale Endabschnitte (7) mit einem zur Anlage am Rohr (1) bestimmten zylindrischen inneren Mantelabschnitt (6) verbunden ist, **dadurch gekennzeichnet, dass** der innere Mantelabschnitt (6) mit wenigstens einem axialen hülsenförmigen Verlängerungsstück (14) versehen ist, das axial über einen Verbindungsabschnitt (18) mit dem betreffenden axialen Endabschnitt (7) herausragt und dass das Verlängerungsstück (14) an dem Rohr (1) festgelegt ist.

2. Rohrdichtkissen nach Anspruch 1, **gekennzeichnet durch** eine umlaufende Spannvorrichtung (15), die das Verlängerungsstück (14) gegen das Rohr (1) drückt.

3. Rohrdichtkissen nach Anspruch 1 oder 2, **dadurch gekennzeichnet, dass** das Verlängerungsstück (14) auf seiner zum Rohr (1) hin zeigenden Seite mit einem umlaufenden Dichtstreifen (17) versehen ist.

4. Rohrdichtkissen nach Anspruch 3, **dadurch gekennzeichnet, dass** der umlaufende Dichtstreifen (17) auf der axialen Höhe der Spannvorrichtung (15) angeordnet ist.

5. Rohrdichtkissen nach einem der Ansprüche 1 bis 4, **dadurch gekennzeichnet, dass** der innere Mantelabschnitt (6) auf seiner dem Rohr (1) zugewandten Seite mit wenigstens einem umlaufenden Dichtstreifen (9) versehen ist.

6. Rohrdichtkissen nach einem der Ansprüche 1 bis 5, **dadurch gekennzeichnet, dass** der innere Mantelabschnitt (6) und das Verlängerungsstück (14) gemeinsam als einstückiges Hülsenteil ausgebildet sind, an dem die axialen Endstücke (7) an dem Verbindungsabschnitt (18) befestigt sind.

7. Rohrdichtkissen nach einem der Ansprüche 1 bis 6, **dadurch gekennzeichnet, dass** der innere Mantelabschnitt (6) an beiden axialen Enden mit einem hülsenförmigen Verlängerungsstück (14) versehen ist.

8. Rohrdichtkissen nach einem der Ansprüche 2 bis 7, **dadurch gekennzeichnet, dass** die Spannvorrichtung durch einen Gurt oder eine Schelle gebildet ist.

9. Rohrdichtkissen nach einem der Ansprüche 1 bis 8, **dadurch gekennzeichnet, dass** der innere Mantelabschnitt (6) und/oder das wenigstens eine Verlängerungsstück (14) einen Durchmesser aufweist, der größer als der Außendurchmesser des Rohres (1) ist und dass der innere Mantelabschnitt (6) und/oder das wenigstens eine Verlängerungsstück (14) unter Faltenbildung an dem Rohr (1) anliegt und zum Rohr (1) hin mit einem umlaufenden Dichtstreifen (9, 17) aus einem geschlossenzelligen, weichen Dichtmaterial abgedichtet ist.

10. Rohrdichtkissen nach einem der Ansprüche 1 bis 9, **dadurch gekennzeichnet, dass** das zylindrische Mantelkissen (4) aus dem zylindrischen äußeren Mantelabschnitt (5), einem dazu parallel angeordneten zylindrischen inneren Mantelabschnitt (6) sowie zwei die Mantelabschnitte verbindenden gewölbten axialen Endabschnitten (7) gebildet ist, dass der Durchmesser des äußeren Mantelabschnitts (5) deutlich größer ist als der vorgegebene maximale Durchmesser der Rohrleitung (8) und dass auf der Außenseite des äußeren Mantelabschnitts (5) wenigstens ein Dichtstreifen (10) aus einem geschlossenzelligen, weichen Dichtmaterial umlaufenden angeordnet ist.

11. Rohrdichtkissen nach einem der Ansprüche 1 bis 10, **dadurch gekennzeichnet dass** der innere Mantelabschnitt (6) mit wenigstens einem axialen Verlängerungsstück (14) versehen ist, das an seiner zum Rohr (1) hin zeigenden Seite einen umlaufenden Dichtstreifen (17) aufweist und dass das Verlängerungsstück (14) mit einer auf den Dichtstreifen (17) drückenden umlaufenden Spannvorrichtung (15) gegen das Rohr (1) drückbar ist.

12. Rohrdichtkissen nach Anspruch 11, **dadurch gekennzeichnet, dass** das Mantelkissen (4) mit mehreren, in seinem Innenraum verlaufenden Gurten (12, 13), die von dem inneren Mantelabschnitt (6) ausgehen, stabilisiert ist.

13. Rohrdichtkissen nach Anspruch 11 oder 12, **dadurch gekennzeichnet, dass** die Gurte (12, 13) mit beiden axialen Endbereichen (7) des Mantelkissens (4) verbunden sind.

14. Rohrdichtkissen nach Anspruch 13, **dadurch gekennzeichnet, dass** die axialen Endabschnitte (7) an ihrer Außenseite Markierungen (22) tragen, deren Ausrichtung der Winkellage der Gurte (12, 13) entspricht.

15. Rohrdichtkissen nach einem der Ansprüche 1 bis 14, **dadurch gekennzeichnet, dass** das Rohr (1) auf beiden Stirnseiten offen ist.

16. Rohrdichtkissen nach einem der Ansprüche 1 bis 15, **dadurch gekennzeichnet, dass** das Rohr (1) mittels eines aufblasbaren Innenkissens verschließbar ausgebildet ist.
